# EUROPÄISCHE PATENTSCHRIFT

(11) **EP 0 707 147 B1**
(45) Veröffentlichungstag und Bekanntmachung des Hinweises auf die Patenterteilung: **08.11.2000**
(21) Anmeldenummer: 95115243.8
(22) Anmeldetag: 27.09.1995
(51) Int. Cl.: F04B 49/00, F04B 49/06

(54) **Steuervorrichtung für eine hydrostatische Maschine**
Control device for a hydrostatic machine
Dispositif de commande pour une machine hydrostatique

(30) Priorität: 06.10.1994 DE 4435750
(43) Veröffentlichungstag der Anmeldung: 17.04.1996
(73) Patentinhaber: BRUENINGHAUS HYDROMATIK GMBH, 89275 Elchingen (DE)
(72) Erfinder: Krebs, Clemens, Dipl.-Ing., D-72070 Tübingen (DE)
(74) Vertreter: Körber, Wolfhart, Dr. rer.nat.

(56) Entgegenhaltungen:
- DE-A- 4 115 606
- DE-C- 3 600 787
- GB-A- 2 157 460
- US-A- 4 055 047
- US-A- 4 432 703
- US-A- 4 777 797
- O+P OELHYDRAULIK UND PNEUMATIK, Bd. 35, Nr. 7, 1991, Seiten 571-575, XP002035649 ZIEGLER, ROLF WILKE, OLIVER: "Pumpendirektregelung: ein energiesparendes Antriebskonzept mit hoher Regelgüte"

## Beschreibung

Die Erfindung betrifft eine Steuervorrichtung für eine hydrostatische Maschine nach dem Oberbegriff des Anspruches 1.

Aus der DE 36 00 787 C1 ist eine derartige, für eine Hydropumpe vorgesehene Steuervorrichtung bekannt, deren Stellzylinder als Differentialzylinder ausgebildet ist, dessen Stellkolben ständig vom Arbeitsdruck der hydrostatischen Maschine in Richtung Null-Verdrängungsvolumen und im ersten Betriebsmodus von einem über das Steuerventil vom Arbeitsdruck abgenommenen Stelldruck in einer Stelldruckleitung in Richtung maximalen Verdrängungsvolumens beaufschlagt wird. Die Steuerventilanordnung umfaßt das als hydraulisch vorgesteuertes 3/3-Wegeventil ausgebildete Steuerventil, zwei Vorsteuerventile für das Steuerventil sowie einen sog. Konstantdruckregler. Ein erstes der beiden Vorsteuerventile ist an eine zu einer Speisepumpe führende Druckmittelleitung und eine zum hydraulischen Steuereingang des Steuerventils führende Vorsteuerdruckleitung angeschlossen, wird im ersten Betriebsmodus von einem Steuer- und Regelgerät mit dem elektrischen Steuersignal angesteuert und erzeugt einen diesem Signal proportionalen Vorsteuerdruck. Der Konstantdruckregler ist in der Druckmittelleitung zwischen der Speisepumpe und dem ersten Vorsteuerventil angeordnet. Das zweite Vorsteuerventil ist mit dem Stellzylinder gekoppelt und erzeugt einen vom Stelldruck abgenommenen, der Stellung des Stellkolbens proportionalen Rückstelldruck in einer Rückstelldruckleitung. Die Sicherheitsschaltanordnung umfaßt drei schaltende Sicherheitsventile. Ein erstes dieser Ventile ist in der Druckmittelleitung zwischen der Speisepumpe und dem Konstantdruckregler angeordnet und weist den elektrisch ansteuerbaren Eingangsteil auf, der im ersten Betriebsmodus vom Steuer- und Regelgerät mit einem weiteren Steuersignal angesteuert wird und das Ventil gegen den Druck einer Feder in einer Schaltstellung mit geöffnetem Durchfluß hält. Das zweite Sicherheitsventil ist in der Vorsteuerdruckleitung und das dritte Sicherheitsventil in der Stelldruckleitung angeordnet; beide Ventile werden im ersten Betriebsmodus über eine Steuerdruckleitung mit dem Ausgangsdruck des Konstantdruckreglers gegen den Druck je einer Feder angesteuert und dadurch in einer Schaltstellung mit geöffnetem Durchfluß gehalten. Ein an die Stelldruckleitung angeschlossene Bypassleitung umgeht das dritte Sicherheitsventil. Beim Übergang vom ersten zum zweiten Betriebsmodus schaltet das erste Sicherheitsventil aufgrund des Wegfalls des elektrischen Signals unter dem Druck der Feder in die Grundstellung, in der der Druck in der Druckmittelleitung und in der Steuerdruckleitung zum Tank hin entlastet wird, wodurch die hydraulische Ansteuerung des zweiten und des dritten Sicherheitsventils entfällt. Diese werden durch den Druck der jeweiligen Feder in die Grundstellung überführt, in der das zweite Sicherheitsventil den hydraulischen Steuereingang des Steuerventils vom Ausgang des ersten Vorsteuerventils trennt und stattdessen mit der Rückstelldruckleitung verbindet, während das dritte Sicherheitsventil den Durchfluß sperrt. Der Rückstelldruck beaufschlagt das Steuerventil in Richtung einer Mittelstellung, in der es den den Stellkolben gegen den Arbeitsdruck beaufschlagenden Stelldruck über die Stelldruckleitung und die Bypassleitung proportional zur gleichzeitig in Richtung Null-Verdrängungsvolumen erfolgenden Verstellung des Stellkolbens zum Tank hin entlastet, so daß der Stellkolben durch den Arbeitsdruck in Richtung Nullstellung verstellt wird. Abgesehen von der relativ aufwendigen Konstruktion der bekannten Steuervorrichtung mit sieben Ventilen und entsprechenden Leitungen weist die Rückführung des Stellkolbens in die Nullstellung mit Hilfe des Arbeitsdrucks den weiteren Nachteil auf, daß mit zunehmendem Zurückschwenken der Hydropumpe in Richtung Null-Verdrängungsvolumen der Arbeitsdruck abfällt und schließlich nicht mehr ausreicht, um den Stellkolben in die dem Null-Verdrängungsvolumen entsprechende Stellung zurückzuführen und dort zu halten.

Es ist Aufgabe der Erfindung, eine Steuervorrichtung der eingangs genannten Art so weiterzubilden, daß sie mit geringerem konstruktiven Aufwand eine sicherere Funktion aufweist.

Diese Aufgabe wird durch die kennzeichnenden Merkmale des Anspruches 1 gelöst. Da beide Druckräume des Stellzylinders über das Steuerventil mit Stelldruckmittel von einer vom Betriebszustand der hydrostatischen Maschine unabhängigen, ständig verfügbaren Stelldruckmittelquelle, z.B. einer Hilfspumpe und/oder einem Druckspeicher, versorgt werden, ist die Rückführung des Stellkolbens in seine dem Null-Verdrängungsvolumen der hydrostatischen Maschine entsprechende Nullstellung unabhängig von deren Verdrängungsvolumen-Einsteilung und damit dem Arbeitsdruck stets gewährleistet. Die Direktsteuerung des Steuerventils erspart das erste Vorsteuerventil der bekannten Steuervorrichtung. Das Steuerventil übernimmt im zweiten Betriebsmodus die Funktion des ersten Sicherheitsventils der bekannten Steuervorrichtung, da es mit Hilfe des elektrisch ansteuerbaren Eingangsteils der Sicherheitsschaltanordnung betätigt und bei Störfällen durch die Federzentrierung in die Nullstellung zurückgeführt wird, in der es aufgrund der positiven Überdeckung seiner Steuerkanten die Zufuhr des Stelldruckmittels zum Stellzylinder sicher sperrt. Das Nullstellungsventil übernimmt im zweiten Betriebsmodus die Funktion des Steuerventils und des zweiten Vorsteuerventils der bekannten Steuervorrichtung, während das Rückstellungsventil durch Steuerung der Stelldruckmittelzufuhr zum entsprechenden Druckraum des Stellzylinders für dessen Verstellung in Richtung Null-Verdrängungsvolumen sorgt. Die erfindungsgemäße Sicherheitsschaltanordnung umfaßt lediglich das elektrisch ansteuerbare Eingangsteil und die Federzentrierung für das Steuerventil sowie den Schaltmagneten und die Druckfeder für das Rückstellungsventil. Die Anzahl der Ventile der erfindungsgemäßen Steuervorrichtung ist somit gegenüber den sieben Ventilen der bekannten Steuervorrichtung um zwei verringert; eine weitere Verringerung auf insgesamt vier Ventile ergibt sich dann, wenn der Stellkolben des Stellzylinders gemäß einer Weiterbildung der Erfindung in Abhängigkeit vom Volumen des in den jeweiligen Druckraum einströmenden Stelldruckmittels verstellbar ist. Außerdem ist hierdurch die Funktion der erfindungsgemäßen Steuervorrichtung unabhängig von möglicherweise auftretenden Druckschwankungen des Stelldruckmittels.

Zur Durchführung der volumenabhängigen Verstellung des Stellkolbens wird vorzugsweise eine Rückführeinrichtung verwendet, die das Steuerventil bei Einstellung auf eine dem jeweils vorgegebenen Sollwert des Verdrängungsvolumens entsprechende Durchflußstellung mit zunehmender Verstellung des Stellkolbens in Richtung des maximalen Verdrängungsvolumens zurückführt, bis es bei Einstellung des Stellkolbens auf den Sollwert des Verdrängungsvolumens seine Mittelstellung einnimmt. Die Rückführeinrichtung kann eine bekannte mechanische Rückführeinrichtung oder eine solche sein, die einen die jeweilige Stellung des Stellkolbens erfassende Sensoreinrichtung und eine Recheneinheit umfaßt, die das Ausgangssignal der Sensoreinrichtung empfängt und das Steuersignal für die Ansteuerung des Eingangsteils des Steuerventils umgekehrt proportional zur Änderung dieses Ausgangssignals der Sensoreinrichtung ändert.

Gemäß einer Weiterbildung der Erfindung wird die Verstellbewegung des Stellkolbens mechanisch auf den Ventilkörper des Nullstellungsventils und von diesem mechanisch auf die Sensoreinrichtung übertragen, wodurch die Funktionssicherheit der erfindungsgemäßen Steuervorrichtung nochmals erhöht wird.

Weitere Merkmale und Vorteile der Erfindung ergeben sich aus den verbleibenden Unteransprüchen

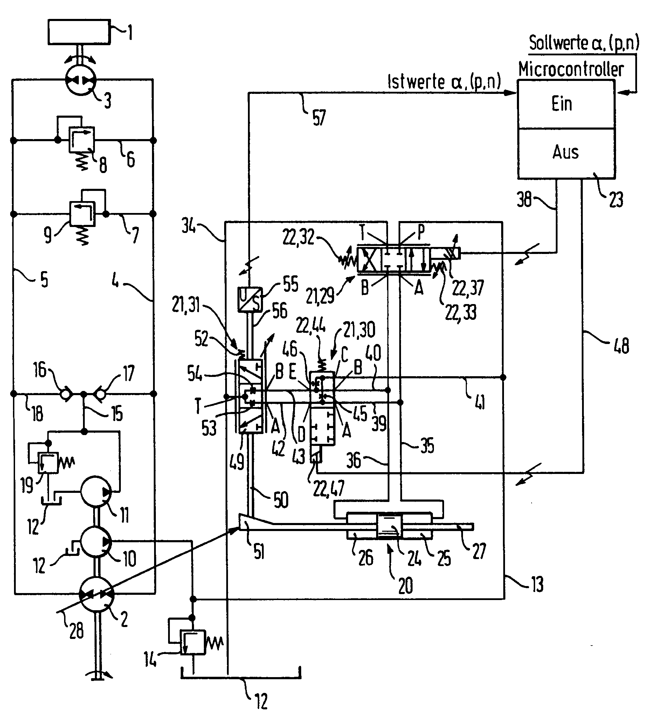

Nachstehend ist die erfindungsgemäße Steuervorrichtung anhand eines bevorzugten Ausführungsbeispiels unter Bezugnahme auf den Schaltplan der einzigen Figur näher beschrieben, die einen hydrostatischen Antrieb zeigt.

Dieser in der Figur dargestellte hydrostatische Antrieb ist für das Drehwerk 1 eines Großbaggers vorgesehen und umfaßt einen nicht gezeigten, drehzahleinstellbaren Antriebsmotor, ein hydrostatisches Getriebe mit einer vom Antriebsmotor antreibbaren Hydropumpe 2 verstellbaren Fördervolumens und einem Hydromotor 3 verstellbaren Schluckvolumens für den Antrieb des Drehwerks 1 sowie die erfindungsgemäße Steuervorrichtung.

Die Hydropumpe 2 ist eine reversierbare Pumpe, die im geschlossenen Kreislauf über zwei Arbeitsleitungen 4, 5 mit dem Hydromotor 3 in Fluidverbindung steht. Beide Arbeitsleitungen 4, 5 sind über zwei Leitungen 6, 7 mit je einem Druckbegrenzungsventil 8 bzw. 9 miteinander verbunden. Beide Druckbegrenzungsventile 8, 9 weisen einander entgegengesetzte Durchflußrichtungen auf, so daß sie den Arbeitsdruck in der jeweils als Vorlaufleitung dienenden Arbeitsleitung 4 bzw. 5 begrenzen. Die Hydropumpe 2 ist mechanisch mit zwei Hilfspumpen 10, 11 konstanten Fördervolumens gekoppelt. Die Hilfspumpe 10 fördert Druckmittel aus dem Tank 12 in eine Stelldruckmittelleitung 13, die an ein Maximaldruckbegrenzungsventil 14 angeschlossen ist. Die Hilfspumpe 11 dient als Speisepumpe und fördert Druckmittel aus dem Tank 12 in eine Speiseleitung 15, die über zwei Rückschlagventile 16, 17 in einer Leitung 18 an die Arbeitsleitungen 4, 5 angeschlossen ist. Jedes Rückschlagventil 16, 17 sperrt in Richtung des jeweils anderen Rückschlagventils 17 bzw. 16, so daß das von der Speisepumpe 11 geförderte Speisedruckmittel in die jeweils als Rücklaufleitung dienende Arbeitsleitung 4 bzw. 5 gefördert wird. Ein Druckbegrenzungsventil 19 zur Aufrechterhaltung eines konstanten Speisedrucks ist an die Speiseleitung 15 angeschlossen.

Die Steuervorrichtung ist der Hydropumpe 2 zugeordnet und umfaßt einen Stellzylinder 20, eine Steuerventilanordnung 21, eine Sicherheitsschaltanordnung 22 und ein Steuer- und Regelgerät 23 in Form eines Mikrocontrollers.

Der Stellzylinder 20 ist ein doppeltwirkender Gleichgangzylinder, in welchem ein Stellkolben 24 einen in der Zeichnung rechten Druckraum 25 und einen in der Zeichnung linken Druckraum 26 abgrenzt und über seine beidseitige Kolbenstange 27 mit einem Stellglied 28 der Hydropumpe 2 zur Verstellung des Verdrängungsvolumens derselben gekoppelt ist. Diese Verstellung des Verdrängungsvolumens erfolgt durch Beaufschlagung des Stellkolbens 24 mit dem von der Hilfspumpe 10 in die Stelldruckmittelleitung 13 geförderten Stelldruckmittel.

Die Steuerventilanordnung 21 umfaßt ein Steuerventil 29, ein Rückstellungsventil 30 und ein Nullstellungsventil 31.

Das Steuerventil 29 ist ein mit zwei einstellbaren Zentrierfedern 32, 33 federzentriertes, direktgesteuertes und stetig verstellbares 4/3-Wegeventil mit einem Arbeitsanschluß T an eine zum Tank 12 führende Entlastungsleitung 34, einem Arbeitsanschluß P an die Stelldruckmittelleitung 13 und zwei Arbeitsanschlüssen A, B an je eine Stelldruckmittel-Zweigleitung 35 bzw. 36, die zu den Druckräumen 25, 26 des Stellzylinders 20 führen. In seiner in der Figur dargestellten (federzentrierten) Mittelstellung sind sämtliche Arbeitsanschlüsse A, B, P und T des Steuerventils 29 gesperrt. Zwecks Verstellung in Richtung einer ersten, in der Figur linken Durchfluß-Endstellung und in entgegengesetzte Richtung, d.h. in Richtung einer zweiten, in der Figur rechten Durchfluß-Endstellung weist das Steuerventil 29 einen elektrisch ansteuerbaren Eingangsteil 37 in Form eines Proportionalmagneten mit gegensinnig wirkenden Wicklungen auf, der über eine Steuersignalleitung 38 mit einem vom Mikrocontroller 23 erzeugten Steuersignal ansteuerbar ist. In der in der Figur linken Durchfluß-Endstellung sind die Arbeitsanschlüsse T und P mit den Arbeitsanschlüssen A bzw. B verbunden, in der in der Figur rechten Durchfluß-Endstellung hingegen ist T mit B und P mit A verbunden. Die Steuerkanten des Steuerventils 29 weisen in der Ventil-Mittelstellung eine positive Überdeckung auf.

Das Rückstellungsventil 30 ist ein schaltendes 5/2-Wegeventil mit zwei Arbeitsanschlüssen A, B an zwei zu den Stelldruckmittel-Zweigleitungen 35, 36 führenden Anschlußleitungen 39 bzw. 40, einem weiteren Arbeitsanschluß C an eine weitere, zur Stelldruckmittelleitung 13 führende Stelldruckmittel-Zweigleitung 41 und zwei Arbeitsanschlüssen D, E an zwei Entlastungszweigleitungen 42, 43. Eine Druckfeder 44 beaufschlagt das Rückstellungsventil 30 in Richtung einer Grundstellung, in der A mit D und B mit E sowie C über je eine Drosselstelle 45, 46 mit A und D bzw. B und E verbunden ist. Das Rückstellungsventil 30 weist als Betätigungselement einen Schaltmagneten 47 auf, der über eine Schaltsignalleitung 48 an den Mikrocontroller 23 angeschlossen ist und bei Ansteuerung mit einem Schaltsignal das Rückstellungsventil 30 gegen die Druckfeder 44 in einer Schaltstellung hält, in der sämtliche Arbeitsanschlüsse A bis D gesperrt sind.

Das Nullstellungsventil 31 ist ein stetig verstellbares 3/3-Wegeventil mit zwei Arbeitsanschlüssen A, B an die Entlastungszweigleitungen 42 bzw. 43 sowie einem Arbeitsanschluß T an die Entlastungsleitung 34. Der Ventilkörper 49 des Nullstellungsventils 31 ist über einen Stößel 50 mechanisch mit einer Rampe 51 gekoppelt, die an der Kolbenstange 27 des Stellzylinders 20 befestigt ist und ein stetiges Gefälle nach rechts in der Zeichnung aufweist. Eine Feder 52 hält den Ventilkörper 49 und den Stößel 50 in Anlage an der Rampe 51. Auf diese Weise wird die Verstellbewegung des Stellkolbens 24 auf den Ventilkörper 49 des Nullstellungsventils 31 übertragen: bei der in der Figur unteren Endstellung des Nullstellungsventils 31 nimmt der Stellkolben 24 seine in der Figur rechte Endstellung ein, die dem maximalen Verdrängungsvolumen der Hydropumpe 2 in einer Stromrichtung entspricht, während dem maximalen Verdrängungsvolumen in der anderen Stromrichtung die in der Figur linke Endstellung des Stellkolbens 24 und damit die in der Figur obere Endstellung des Nullstellungsventils 31 entsprechen. In der in der Figur unteren Endstellung des Nullstellungsventils 31 ist der Arbeitsanschluß B mit dem Arbeitsanschluß T verbunden und der verbleibende Arbeitsanschluß A gesperrt, während in der in der Figur oberen Endstellung der Arbeitsanschluß B gesperrt und die verbleibenden Anschlüsse A und T miteinander verbunden sind. Bei der in der Figur gezeigten Mittel- oder Nullstellung des Stellkolbens 24, die dem Null-Verdrängungsvolumen der Hydropumpe 2 entspricht, nimmt das Nullstellungsventil 31 eine Mittel- oder Schwimmstellung ein, in der seine Arbeitsanschlüsse A und B über je eine Drosselstelle 53, 54 mit dem Arbeitsanschluß T verbunden sind.

Die Sicherheitsschaltanordnung 22 umfaßt die Zentrierfedern 32, 33 und den Proportionalmagneten 37 des Steuerventils 29 sowie die Druckfeder 44 und den Schaltmagneten 47 des Rückstellungsventils 30.

Dem Steuerventil 29 ist eine Rückführeinrichtung zugeordnet, die eine Sensoreinrichtung 55 in Form eines induktiven Wegaufnehmers und eine Recheneinheit umfaßt, die Teil des Mikrocontrollers 23 ist. Die Sensoreinrichtung 55 erfaßt die Verstellbewegung des Stellkolbens 24 über die Rampe 51, den Stößel 50, den Ventilkörper 49 des Nullstellungsventils 31 und einen weiteren Stößel 56, über den sie mit dem Ventilkörper 49 gekoppelt ist. Die Recheneinheit empfängt über eine an den Mikrocontroller 23 angeschlossene Signalleitung 57 das Ausgangssignal der Sensoreinrichtung 55 und ändert den mittels einer Sollwertvorgabe-Einrichtung (angedeutet durch den Pfeil α rechts vom Mikrocontroller 23) vorgegebenen Sollwert des Steuersignals umgekehrt proportional zur Änderung des Ausgangssignals der Sensoreinrichtung 55, sobald das Steuerventil 29 auf die diesem vorgegebenen Steuersignal-Sollwert entsprechende Durchflußstellung in Richtung nach links oder nach rechts in der Figur eingestellt ist und der Stellkolben 24 durch das in den entsprechenden Druckraum 25 bzw. 26 des Stellzylinders 20 einströmende Stelldruckmittel in Richtung maximalen Verdrängungsvolumens nach links bzw. nach rechts in der Figur verstellt wird; der jeweils andere Druckraum 26 bzw. 25 des Stellzylinders 20 ist über die Stelldruckmittel-Zweigleitung 36 bzw. 35 an die zum Tank 12 führende Entlastungsleitung 34 angeschlossen. Die Rückführeinrichtung hat also die Funktion, gleichzeitig mit der Verstellbewegung des Stellkolbens 24 in Richtung maximalen Verdrängungsvolumens das Steuerventil 29 in die Mittelstellung zurückzuführen, die dann erreicht ist, wenn der Stellkolben 24 auf das dem vorgegebenen Sollwert des Steuersignals entsprechende Verdrängungsvolumen eingestellt ist. Mit anderen Worten, der Stellkolben 24 wird nicht in Abhängigkeit vom Druck des Stelldruckmittels, sondern vom Volumen des in den jeweiligen Druckraum 25 oder 26 einströmenden Stelldruckmittels verstellt, welches selbstverständlich mit einem für die Verstellung notwendigen Druck beladen sein muß. In der Mittelstellung sperrt das Steuerventil 29 den weiteren Zufluß von Stelldruckmittel zum Steuerzylinder 20, so daß das einmal eingestellte Verdrängungsvolumen bis zur nächsten Sollwertvorgabe unverändert aufrechterhalten wird.

Die Funktion des in der Figur dargestellten hydrostatischen Antriebs ist allgemein bekannt, so daß nachfolgend lediglich die erfindungsgemäße Steuervorrichtung beschrieben wird, die bei störungsfreiem Betrieb im ersten Betriebsmodus und bei Störfällen im zweiten Betriebsmodus arbeitet. Der Mikrocontroller 23 erfaßt die Störfälle, wie beispielsweise Unterbrechung der elektrischen Leitung 57 oder 38 bzw. Defektes des Proportionalmagneten 37.

Im störungsfreien Betrieb steuert der Mikrocontroller 23 den Proportionalmagneten 37 des Steuerventils 29 über die Steuersignalleitung 38 mit den vorgegebenen und während der vorstehend beschriebenen Rückführung mit dem stetig reduzierten Sollwert des Steuersignals zwecks Einstellung der Hydropumpe 2 auf entsprechendes Verdrängungsvolumen sowie den Schaltmagneten 47 über die Schaltsignalleitung 48 mit einem Schaltsignal an, der das Rückstellungsventil 30 in der Sperrstellung hält, so daß die durch das Steuerventil 29 gesteuerte Stelldruckmittelzufuhr zum Stellzylinder 20 nicht durch weitere Stelldruckmittelzufuhr über die Stelldruckmittel-Zweigleitung 41 und das Rückstellungsventil 30 gestört wird. Das Nullstellungsventil 31 nimmt infolge der mechanischen Kopplung mit der Rampe 51 an der Kolbenstange 27 eine der jeweiligen Stellung des Stellkolbens 24 entsprechende Stellung ein, beispielsweise die in der Figur obere Endstellung, die der in der Figur linken Endstellung des Stellkolbens 24 entspricht.

Beim Auftreten eines Störfalles unterbricht der Mikrocontroller 23 die Ansteuerung des Proportionalmagneten 37 und des Schaltmagneten 47, so daß das Steuerventil 29 durch die Zentrierfedern 32, 33 in seine sperrende Mittelstellung, falls es diese noch nicht einnimmt, zurückgestellt und das Rückstellungsventil 30 durch die Druckfeder 44 in seine Grundstellung mit geöffnetem Durchfluß geschaltet wird, in den es die Stelldruckmittelleitung 13 über die Stelldruckmittel-Zweigleitung 41, die Drosselstellen 45, 46, die Anschlußleitungen 39, 40 und die Stelldruckmittel-Zweigleitungen 35, 36 an beide Druckräume 25, 26 des Stellzylinders 20 anschließt. Da jedoch das Nullstellungsventil 31 die Entlastungsleitung 43 sperrt, die über das Rückstellungsventil 30, die Anschlußleitung 40 und die Stelldruckmittel-Zweigleitung 36 zum Druckraum 26 des Stellzylinders 20 führt, strömt das Stelldruckmittel von der Stelldruckmittelleitung 31 in diesen Druckraum 26 ein und verschiebt den Stellkolben 24 in der Zeichnung nach rechts in Richtung Nullstellung, wobei das Stelldruckmittel in dem sich dabei verkleinernden Druckraum 25 über die Stelldruckmittel-Zweigleitung 35, die Anschlußleitung 39, das Rückstellungsventil 30, die Entlastungszweigleitung 42, das Nullstellungsventil 31 und die Entlastungsleitung 34 zum Tank 12 hin entlastet wird, bis der Stellkolben 24 und damit auch das Nullstellungsventil 31 die jeweilige Mittel- bzw. Nullstellung einnehmen. Die Mittelstellung des Nullstellungsventils 31 ist eine sog. Schwimmstellung, in der einer möglicherweise auftretenden Verstellbewegung des Stellkolbens 24 beispielsweise in der Figur nach rechts der dabei vor der Drossel 53 sich aufbauende Staudruck entgegengewirkt und dadurch der Stellkolben 24 in seiner Nullstellung gehalten wird.

## Patentansprüche

1. Steuervorrichtung für eine hydrostatische Maschine, die ein verstellbares Verdrängungsvolumen und zwei Stromrichtungen aufweist, mit:
- einem doppeltwirkenden Stellzylinder mit einem Stellkolben und zwei Druckräumen und zum Verstellen des Verdrängungsvolumens in Abhängigkeit von der Beaufschlagung des Stellkolbens mit einem Stelldruckmittel von einer Stelldruckmittelquelle,
- einer Steuerventilanordnung mit wenigstens einem stetig verstellbaren Steuerventil und zum Steuern der Beaufschlagung des Stellkolbens mit dem Stelldruckmittel bei störungsfreiem Betrieb in Abhängigkeit von einem elektrischen Steuersignal und bei Störfällen zwecks Einstellung eines Null-Verdrängungsvolumens in Abhängigkeit von der Stellung des Stellkolbens, und
- einer Sicherheitsschaltanordnung, die wenigstens einen elektrisch ansteuerbaren Eingangsteil aufweist und bei einem einen Störfall kennzeichnenden Ausfall der elektrischen Ansteuerung die Steuerventilanordnung von einem ersten Betriebsmodus entsprechend einem störungsfreien Betrieb in einen zweiten Betriebsmodus überführt,
**dadurch gekennzeichnet,**
- daß das Steuerventil (29) ein direktgesteuertes, von einer Mittelstellung mit positiver Überdeckung und gesperrtem Durchfluß bis in jeweils eine von zwei Durchfluß-Endstellungen verstellbares 4/3-Wegeventil ist, das in den beiden Durchfluß-Endstellungen jeweils einen der beiden Druckräume (25 bzw. 26) des Stellzylinders (20) an die Stelldruckmittelquelle (10) und den jeweils anderen Druckraum (26 bzw. 25) an den Tank (12) anschließt,
- daß die Stelldruckmittelquelle (10) eine vom Betriebszustand der hydrostatischen Maschine unabhängige, ständig verfügbare Stelldruckmittelquelle ist,
- daß die Steuerventilanordnung (21) ferner ein schaltendes Rückstellungsventil (30) und ein stetig verstellbares Nullstellungsventil (31) umfaßt, das synchron und wegproportional mit dem Stellkolben (24) zwischen einer dem Null-Verdrängungsvolumen entsprechenden Mittelstellung und je einer dem maximalen Verdrängungsvolumen entsprechenden Endstellung verstellbar ist,
- daß das Rückstellungsventil (30) ein 5/2-Wegeventil mit einer Schaltstellung mit gesperrtem Durchfluß und einer Grundstellung ist, in der zwei zum Nullstellungsventil (31) führende Entlastungszweigleitungen (42, 43) mit den Druckräumen (25, 26) des Stellzylinders (20) und über je eine Drosselstelle (45, 46) mit der Stelldruckmittelquelle (10) verbunden sind,
- daß der elektrisch ansteuerbare Eingangsteil (37) der Sicherheitsschaltanordnung (22) zur Betätigung des Steuerventils (29) vorgesehen ist, und daß die Sicherheitsschaltanordnung (22) ferner eine Federzentrierung (32, 33) für das Steuerventil (29) sowie einen Schaltmagneten (47) und eine Druckfeder (44) für das Rückstellungsventil (30) umfaßt, das im ersten Betriebsmodus durch den Schaltmagneten (47) gegen den Druck der Druckfeder (44) in der Schaltstellung gehalten ist, und
- daß das Nullstellungsventil (31) in der Mittelstellung die Entlastungszweigleitungen (42, 43) über je eine Drosselstelle (53, 54) mit dem Tank (12) verbindet und in jeder Endstellung diejenige Entlastungszweigleitung (42 bzw. 43) sperrt, die über das in die Grundstellung geschaltete Rückstellungsventil (30) an den im ersten Betriebsmodus mit dem geringeren Volumen des Stelldruckmittels gefüllten Druckraum (25 bzw. 26) des Stellzylinders (20) angeschlossen ist, und die jeweils andere Entlastungszweigleitung (43 bzw. 42) mit dem Tank (12) verbindet, so daß das im zweiten Betriebsmodus über das Rückstellungsventil (30) dem Stellzylinder (20) zugeführte Stelldruckmittel dessen Stellkolben (24) in Richtung Null-Verdrängungsvolumen verstellt und das in den sich dabei verkleinernden Druckraum (26 bzw. 25) befindliche Stelldruckmittel zum Tank (12) hin entlastet wird, bis das Nullstellungsventil (31) seine Mittelstellung einnimmt.

2. Steuervorrichtung nach Anspruch 1,
**dadurch gekennzeichnet**,
daß der Stellzylinder (20) ein Gleichgangzylinder ist.

3. Steuervorrichtung nach Anspruch 1 oder 2,
**dadurch gekennzeichnet**,
daß die Stelldruckmittelquelle (10) eine mit der hydrostatischen Maschine (2) gekoppelte Hilfspumpe ist.

4. Steuervorrichtung nach wenigstens einem vorhergehenden Anspruch,
**dadurch gekennzeichnet**,
daß der Stellkolben (24) des Stellzylinders (20) in Abhängigkeit vom Volumen des in den jeweiligen Druckraum (25, 26) einströmenden Stelldruckmittels verstellbar ist.

5. Steuervorrichtung nach wenigstens einem vorhergehenden Anspruch,
**gekennzeichnet durch** eine Rückführeinrichtung, die das Steuerventil (29) bei Einstellung auf eine dem jeweils vorgegebenen Sollwert des Verdrängungsvolumens entsprechende Durchflußstellung mit zunehmender Verstellung des Stellkolbens (24) in Richtung des maximalen Verdrängungsvolumens zurückführt, bis es bei Einstellung des Stellkolbens (24) auf den Sollwert des Verdrängungsvolumens seine Mittelstellung einnimmt.

6. Steuervorrichtung nach Anspruch 5,
**dadurch gekennzeichnet**,
daß die Rückführeinrichtung eine die jeweilige Stellung des Stellkolbens (24) erfassende Sensoreinrichtung (55) und eine Recheneinheit umfaßt, die das Ausgangssignal der Sensoreinrichtung (55) empfängt und das Steuersignal für die Ansteuerung des Eingangsteils (37) des Steuerventils (29) umgekehrt proportional zur Änderung dieses Ausgangssignals der Sensoreinrichtung (55) ändert.

7. Steuervorrichtung nach wenigstens einem vorhergehenden Anspruch,
**dadurch gekennzeichnet**,
daß der elektrisch ansteuerbare Eingangsteil (37) des Steuerventils (29) ein Proportionalmagnet ist.

8. Steuervorrichtung nach wenigstens einem der Ansprüche 1 bis 6,
**dadurch gekennzeichnet**,
daß das Steuerventil ein elektro-hydraulisches Servoventil ist.

9. Steuervorrichtung nach wenigstens einem der Ansprüche 6 bis 8,
**dadurch gekennzeichnet**,
daß die Recheneinheit Teil eines Steuergeräts (23) ist, das den Eingangsteil (37) des Steuerventils (29) und den Schaltmagneten (47) des Rückstellungsventils (30) mit dem Steuersignal bzw. einem Schaltsignal ansteuert.

10. Steuervorrichtung nach wenigstens einem vorhergehenden Anspruch,
**dadurch gekennzeichnet,**
daß die Verstellbewegung des Stellkolbens (24) mechanisch auf den Ventilkörper (49) des Nullsteuerungsventils (31) übertragen wird.

11. Steuervorrichtung nach Anspruch 10,
**dadurch gekennzeichnet**,
daß die Kolbenstange (27) des Stellzylinders (20) eine Rampe (51) aufweist, deren Bewegung durch einen Stößel (50) auf den Ventilkörper (49) des Nullstellungsventils (31) übertragen wird.

12. Steuervorrichtung nach Anspruch 11,
**gekennzeichnet durch** eine den Ventilkörper (49) des Nullstellungsventils (31) in Richtung der Rampe (51) beaufschlagende Feder (52).

13. Steuervorrichtung nach wenigstens einem der Ansprüche 6 bis 12,
**dadurch gekennzeichnet**,
daß die Bewegung des Ventilkörpers (49) des Nullstellungsventils (31) mechanisch auf die Sensoreinrichtung (55) übertragen wird.

14. Steuervorrichtung nach wenigstens einem der Ansprüche 6 bis 13,
**dadurch gekennzeichnet**,
daß die Bewegung des Stellkolbens (24) mechanisch unmittelbar auf die Sensoreinrichtung (55) übertragen wird.

## Claims

1. Control device for a hydrostatic machine, which has an adjustable displacement volume and two flow directions, comprising:
- a double-action actuating cylinder having an actuating piston and two pressure chambers and used to adjust the displacement volume in dependence upon the loading of the actuating piston with an actuating pressure medium from an actuating pressure medium source,
- a control valve arrangement having at least one continuously adjustable control valve and used to control the loading of the actuating piston with the actuating pressure medium during trouble-free operation in dependence upon an electrical control signal and in the event of a fault to adjust a zero displacement volume in dependence upon the position of the actuating piston, and
- a safety switching arrangement, which comprises at least one electrically triggerable input part and in the event of a fault-characterizing failure of the electric triggering switches the control valve arrangement over from a first operating mode corresponding to trouble-free operation into a second operating mode,
characterized in
- that the control valve (29) is a directly controlled 4/3-way valve, which is adjustable from a central position with positive overlap and blocked flow into a respective one of two flow end positions and which in each of the two flow end positions connects one of the two pressure chambers (25 or 26) of the actuating cylinder (20) to the actuating pressure medium source (10) and the other pressure chamber (26 or 25) to the tank (12),
- that the actuating pressure medium source (10) is a constantly available actuating pressure medium source independent of the operating state of the hydrostatic machine,
- that the control valve arrangement (21) moreover comprises a switching restoring valve (30) and a continuously adjustable zero-position valve (31), which is adjustable synchronously and displacement-proportionally by the actuating piston (24) between a central position corresponding to the zero displacement volume and end positions each corresponding to the maximum displacement volume,
- that the restoring valve (30) is a 5/2-way valve having a blocked-flow position and a basic position, in which two relief branch lines (42, 43) leading to the zero-position valve (31) are connected to the pressure chambers (25, 26) of the actuating cylinder (20) and each via a throttle point (45, 46) to the actuating pressure medium source (10),
- that the electrically triggerable input part (37) of the safety switching arrangement (22) is provided for operating the control valve (29), and that the safety switching arrangement (22) moreover comprises a spring centring device (32, 33) for the control valve (29) as well as an actuating magnet (47) and a compression spring (44) for the restoring valve (30), which in the first operating mode is held in the switching position by the actuating magnet (47) counter to the pressure of the compression spring (44), and
- that the zero-position valve (31) in the central position connects the relief branch lines (42, 43) each by a throttle point (53, 54) to the tank (12) and in each end position blocks the relief branch line (42 or 43) connected by the restoring valve (30), which has switched into the basic position, to the pressure chamber (25 or 26) of the actuating cylinder (20) filled in the first operating mode with the lower volume of the actuating pressure medium and connects the other relief branch line (43 or 42) to the tank (12) so that the actuating pressure medium supplied in the second operating mode via the restoring valve (30) to the actuating cylinder (20) adjusts the latter's actuating piston (24) in the direction of zero displacement volume and the actuating pressure medium situated in the, in said case, diminishing pressure chamber (26 or 25) is relieved towards the tank (12) until the zero-position valve (31) occupies its central position.

2. Control device according to claim 1,
characterized in
that the actuating cylinder (20) is a synchronizing cylinder.

3. Control device according to claim 1 or 2,
characterized in
that the actuating pressure medium source (10) is an auxiliary pump coupled to the hydrostatic machine (2).

4. Control device according to at least one preceding claim,
characterized in
that the actuating piston (24) of the actuating cylinder (20) is adjustable in dependence upon the volume of the actuating pressure medium flowing into the respective pressure chamber (25, 26).

5. Control device according to at least one preceding claim,
characterized by a return device, which returns the control valve (29) upon adjustment to a flow position corresponding to the respective selected setpoint value of the displacement volume with progressive adjustment of the actuating piston (24) in the direction of the maximum displacement volume until the control valve upon adjustment of the actuating piston (24) to the setpoint value of the displacement volume occupies its central position.

6. Control device according to claim 5,
characterized in
that the return device comprises a sensor device (55), which detects the respective position of the actuating piston (24), and an arithmetic unit which receives the output signal of the sensor device (55) and changes the control signal for triggering the input part (37) of the control valve (29) in an inversely proportional manner to the change of said output signal of the sensor device (55).

7. Control device according to at least one preceding claim,
characterized in
that the electrically triggerable input part (37) of the control valve (29) is a proportional magnet.

8. Control device according to at least one of claims 1 to 6,
characterized in
that the control valve is an electro-hydraulic servo valve.

9. Control device according to at least one of claims 6 to 8,
characterized in
that the arithmetic unit is part of a control appliance (23), which triggers the input part (37) of the control valve (29) and the actuating magnet (47) of the restoring valve (30) with the control signal and a switching signal respectively.

10. Control device according to at least one preceding claim,
characterized in
that the adjusting motion of the actuating piston (24) is transmitted mechanically to the valve body (49) of the zero-position valve (31).

11. Control device according to claim 10,
characterized in
that the piston rod (27) of the actuating cylinder (20) has a ramp (51), the motion of which is transmitted by a plunger (50) to the valve body (49) of the zero-position valve (31).

12. Control device according to claim 11,
characterized by a spring (52), which loads the valve body (49) of the zero-position valve (31) in the direction of the ramp (51).

13. Control device according to at least one of claims 6 to 12,
characterized in
that the motion of the valve body (49) of the zero-position valve (31) is transmitted mechanically to the sensor device (55).

14. Control device according to at least one of claims 6 to 13,
characterized in
that the motion of the actuating piston (24) is transmitted mechanically directly to the sensor device (55).

## Revendications

1. Dispositif de commande pour une machine hydrostatique, qui comporte un volume de refoulement réglable et deux directions de circulation, comprenant :
- un vérin de réglage à double effet comportant un piston de réglage et deux chambres de pression et, pour le réglage du volume de refoulement en fonction de la charge du piston de réglage, avec un fluide comprimé de réglage délivré par une source de fluide comprimé de réglage,
- un dispositif à soupapes de commande comportant au moins une soupape de commande réglable continûment et servant à commander la charge du piston de réglage avec le fluide comprimé de réglage dans le cas d'un fonctionnement parfait en fonction d'un signal de commande électrique et, dans le cas de perturbations, pour le réglage d'un volume de refoulement nul, en fonction de la position du piston de réglage, et
- un montage de sécurité, qui comporte au moins une partie d'entrée commandable électriquement et, dans le cas d'une défaillance de la commande électrique, caractérisant un cas de perturbations, le dispositif à soupape de commande est commuté d'un premier mode de fonctionnement dans un second mode de fonctionnement conformément à un fonctionnement parfait,
caractérisé en ce
- que la soupape de commande (29) est une soupape à 4/3 voies commandée directement et réglable depuis une position médiane avec chevauchement positif et passage bloqué, jusque dans respectivement l'une de deux positions d'extrémité de transfert, et qui, dans les deux positions d'extrémité de transfert, raccorde respectivement l'une des deux chambres de pression (25 ou 26) du vérin de réglage (20) à la source de fluide comprimé de réglage (10) et l'autre chambre de pression respective (26 ou 25) au réservoir (12),
- que la source de fluide comprimé de réglage (10) est une source de fluide comprimé de réglage qui est disponible en permanence et est indépendante de l'état de fonctionnement de la machine hydrostatique,
- que le dispositif à soupapes de commande (21) comporte en outre une soupape de rappel commutable (30) et une soupape (31) de réglage de position zéro réglable de façon continue et qui est déplaçable de façon synchrone et d'une manière proportionnelle au déplacement, avec le piston de réglage (24) entre une position médiane, qui correspond au volume de refoulement nul, et respectivement une position d'extrémité qui correspond au volume de refoulement maximum,
- que la soupape de rappel (30) est une soupape à 5/2 voies comportant une position de commutation avec transfert bloqué, et une position de base, dans laquelle deux canalisations de dérivation de détente (42,43), qui aboutissent à la soupape (31) de réglage de la position zéro, sont reliées aux chambres de pression (25,26) du vérin de réglage (20) et, par l'intermédiaire d'étranglements respectifs (45,46), à la source (10) du fluide comprimé de réglage, et
- que la partie d'entrée (37), commandable électriquement, du montage de sécurité (22) est prévue pour l'actionnement de la soupape de commande (29) et que le montage de sécurité (22) comporte en outre un dispositif de centrage à ressort (32,33) pour la soupape de commande (29) ainsi qu'un élément de commutation (47) et un ressort de pression (44) pour la soupape de rappel (30), qui, dans le premier mode de fonctionnement, est maintenue dans la position de commutation par l'élément de commutation (47) à l'encontre de la pression du ressort (44), et
- que dans la position médiane, la soupape (31) de réglage de zéro relie les canalisations de dérivation de détente (42,43) au réservoir (12) par l'intermédiaire d'étranglements (53,54) et, dans chaque position d'extrémité, cette soupape bloque la canalisation de dérivation de départ (42 et 43) qui est raccordée, par l'intermédiaire de la soupape de rappel (30) commutée dans la position de base, à la chambre de pression (25 ou 26) du vérin de réglage (20), qui est remplie dans le premier mode de fonctionnement par le volume plus faible du fluide de refoulement de réglage, et relie l'autre canalisation respective de dérivation de détente (43 ou 42) au réservoir (12) de sorte que le fluide comprimé de réglage qui, dans le second mode de fonctionnement, est envoyé au vérin de réglage (20) par l'intermédiaire de la soupape de rappel (30), règle le piston de réglage (24) de ce vérin en direction du volume de refoulement nul et que le fluide comprimé de réglage situé dans la chambre de pression (26 ou 25), qui diminue, est détendu en direction du réservoir (12), jusqu'à ce que la soupape (31) de réglage de la position zéro prenne sa position médiane.

2. Dispositif de commande selon la revendication 1, caractérisé en ce que le vérin de réglage (20) est un vérin de synchronisme.

3. Dispositif de commande selon la revendication 1 ou 2, caractérisé en ce que la source (10) du fluide comprimé de réglage est une pompe auxiliaire couplée à la machine hydrostatique (2).

4. Dispositif de commande selon au moins l'une des revendications précédentes, caractérisé en ce que le piston de réglage (24) du vérin de réglage (20) est réglable en fonction du volume du fluide comprimé de réglage pénétrant dans la chambre de pression respective (25,26).

5. Dispositif de commande selon au moins l'une des revendications précédentes, caractérisé par un dispositif de renvoi, qui, lors du réglage sur une position de transfert correspondant à la valeur de consigne respective prédéterminée du volume de refoulement, ramène la soupape de commande (29), avec un déplacement croissant du piston de réglage (24) en direction du volume de refoulement maximum, jusqu'à ce que, lors du réglage du piston de réglage (24) sur la valeur de consigne du volume de refoulement, la soupape prend sa position médiane.

6. Dispositif de commande selon la revendication 5, caractérisé en ce que le dispositif de renvoi comprend un dispositif à capteur (55) détectant la position respective du piston de réglage (24), et une unité de calcul, qui reçoit le signal de sortie du dispositif à capteur (55) et modifie le signal de commande pour la commande de la partie d'entrée (37) de la soupape de commande (29) d'une manière inversement proportionnelle à la modification de ce signal de sortie du dispositif à capteur (55).

7. Dispositif de commande selon au moins l'une des revendications précédentes, caractérisé en ce que la partie d'entrée commandable électriquement (37) de la soupape de commande (29) est un aimant à action proportionnelle.

8. Dispositif de commande selon au moins l'une des revendications 1 à 6, caractérisé en ce que la soupape de commande est une servosoupape électrohydraulique.

9. Dispositif de commande selon au moins l'une des revendications 6 à 8, caractérisé en ce que l'unité de calcul fait partie d'un appareil de commande (23) qui commande la partie d'entrée (35) de la soupape de commande (29) et l'élément de commutation (47) de la soupape de rappel (30) avec le signal de commande ou un signal de commutation.

10. Dispositif de commande selon au moins l'une des revendications précédentes, caractérisé en ce que le déplacement de réglage du piston de réglage (24) est transmis mécaniquement au corps (39) de la soupape (31) de réglage de la position zéro.

11. Dispositif de commande selon la revendication 10, caractérisé en ce que la tige de piston (27) du vérin de réglage (20) comporte une rampe (51), dont le déplacement est transmis par un poussoir (50) au corps (49) de la soupape (31) de réglage de zéro.

12. Dispositif de commande selon la revendication 11, caractérisé par un ressort (52) qui charge le corps (49) de la soupape (31) de réglage de zéro en direction de la rampe (51).

13. Dispositif de commande selon au moins l'une des revendications 6 à 12, caractérisé en ce que le déplacement du corps (49) de la soupape (31) de réglage de zéro est transmis mécaniquement au dispositif à capteur (55).

14. Dispositif de commande selon au moins l'une des revendications 6 à 13, caractérisé en ce que le déplacement du piston de réglage (24) est transmis mécaniquement directement au dispositif à capteur (55).
